# EUROPEAN PATENT SPECIFICATION

(11) **EP 2 565 017 B1**
(45) Date of publication and mention of the grant of the patent: **26.08.2015**
(21) Application number: 12380044.3
(22) Date of filing: 03.09.2012
(51) Int. Cl.: B29C 65/18, B65B 51/10, B65B 59/04

(54) **Welding unit for an automatic container forming and filling machine**
Schweißeinheit für eine automatischen Behälterform- und -füllmaschine
Unité de soudage automatique destinée à une machine de formage et de remplissage de récipients

(30) Priority: 05.09.2011 ES 201131455
(43) Date of publication of application: 06.03.2013
(73) Proprietor: Mespack, S.L., 08130 Santa Perpètua de Mogoda (Barcelona) (ES)
(72) Inventor: Mora Flores, Francisco, 08100 Mollet del Vallès Barcelona (ES); Fité Sala, Menna, 08130 Santa Perpetua de Mogada Barcelona (ES); Marti Roche, Enric, 08950 Esplugues de Llobregat Barcelona (ES)
(74) Representative: Torner Lasalle, Elisabet

(56) References cited:
- DE-A1- 19 949 915
- FR-A1- 2 504 495
- JP-A- 8 192 825
- NL-C2- 1 008 645
- US-A- 3 488 914
- US-A- 4 306 400

## Description

### Technical Field

The present invention generally relates to a welding unit for an automatic container forming and filling machine, and more particularly to a welding unit provided with means which allows adapting pressure and heat applicators to different container formats easily, quickly and economically.

### Background of the Invention

Container forming and filling machines are known in the prior art which are capable of forming containers in the form of a pouch or bag from a band of flexible heat-sealable film supplied from a reel, filling said containers with one or more products, and hermetically sealing the filled containers. There are two main variants to these container forming and filling machines. Vertical type machines, in which the band of film is longitudinally cut into several strips of film and each strip of film is rolled in the form of a tube around a vertical core to form the container by heat sealing thereon, and the tube is vertically moved downwards while at the same time the containers are filled with one or more products supplied through an inner passage of the core and finally closed by heat sealing; and horizontal type machines, in which the band of film is folded to form by heat sealing containers open at the top which are transported along a horizontal path along which the containers are filled with one or more products and finally closed by heat sealing.

A welding unit is used in both machine types to form horizontal weld beads at the lower and upper edges of the container by heat sealing. Each of these welding units comprises at least one pair of pressure and heat applicators facing one another and located on opposite sides of a container precursor made of the band of film, power supply means supplying power for heating said pressure and heat applicators, and driving means alternately moving said pressure and heat applicators between a released position, in which the pressure and heat applicators are separated from the container precursor, and a welding position, in which the pressure and heat applicators press the container precursor while at the same time applying heat to form a weld. The pressure and heat applicators have projections configured to form a weld with a predetermined format in contact with the container precursor.

One drawback with this welding unit of the prior art is that when the container forming, filling and sealing machine for containers is to be adapted to a different format, it is necessary to disconnect the pressure and heat applicators in their entirety from the heat energy supply means and from the driving means, replace them with others which are suitable for the new format, and reconnect the new pressure and heat applicators to the heat energy supply means and to the driving means, which involves excessive time loss with a high economic cost. Furthermore, the machine user must have a set of pressure and heat applicators in their entirety for every different container format, which also entails a high economic cost.

DE 19949915 A1, which is considered the closest prior art, discloses a welding unit for an automatic container forming and filling machine comprising at a pair of pressure and heat applicators facing one another and located on opposite sides of a container precursor made of flexible heat-sealable film, heating means heating said pressure and heat applicators and driving means moving said pressure and heat applicators between a released position and a welding position in which the pressure and heat applicators press and apply heat on the container precursor to form a weld. Each of said pressure and heat applicators comprises a base body heated by said heating means and connected to said driving means, a contact element configured to form a weld with a predetermined format in contact with the container precursor, and releasable holding means for fixing said contact element to said base body, wherein the contact element is heated by contact with the base body.

Other welding units for automatic container forming and filling machines are described in documents JP 8192825 A, NL 1008645 C2, US 3488914 A, FR 2504495 A1 and US 4306400 A.

### Summary of the Invention

The present invention aids in mitigating the foregoing and other drawbacks by providing a welding unit for an automatic container forming and filling machine comprising one or more pairs of pressure and heat applicators facing one another and located on opposite sides of a container precursor made of flexible heat-sealable film, heating means for heating said pressure and heat applicators, and driving means moving the pressure and heat applicators between a released position, in which the pressure and heat applicators are separated from the container precursor, and a welding position, in which the pressure and heat applicators press and apply heat on the container precursor to form a weld. Each of the pressure and heat applicators comprises a base body heated by said heating means and connected to said driving means, a contact element configured to form a weld with a predetermined format in contact with the container precursor, and releasable holding means for fixing said contact element to said base body. When in use, the contact element is heated by contact with the base body.

With this construction, it is sufficient to loosen or remove said releasable holding means, replace the contact elements with others which are adapted to the new format, and tighten or place the releasable holding means again to adapt the welding unit to containers with a new format. This operation is easy, quick and economical in comparison with replacing the pressure and heat applicators in their entirety necessary in the welding units of the prior art because in the welding unit of the present invention the interchangeable contact elements do not need to be disconnected from and connected to the heat energy supply means or to the driving means. Furthermore, with the welding unit of the present invention the user only needs to have several contact elements adapted to different formats, which is significantly more economical than the need of having several pressure and heat applicators in their entirety as in the welding units of the prior art.

Thus, with the welding unit of the present invention, the format change is performed by means of easy and quick operations allowing significant time saving. It is not necessary to make additional adjustments once the format change is made because the setting of the driving means has not been altered. It is not necessary to change the heating means or the temperature probes. If a new format is needed, it is only necessary to provide the contact elements corresponding to the new format and not the entire welding unit, which is more economical.

The contact element of each pressure and heat applicator has a first heat transfer surface which is in contact with a corresponding second heat transfer surface formed in the base body when in use, and the mentioned releasable holding means are configured to keep said first heat transfer surface of the contact element pressed against the second heat transfer surface of the base body to assure the maximum rate of heat transfer from the base body to the contact element, which is made of a material with high heat conductivity, such as steel or an aluminum alloy. The heating means preferably comprise at least one electric resistance associated with the base body and connected to power supply means.

The releasable holding means comprise at least one anchoring part connected to the base body by a releasable fixing element, such as a screw or the like, which can be operated to allow moving said anchoring part with respect to the base body between a loosened position, in which the anchoring part is separated from the base body and the contact element can be joined to or separated from the base body, and a tightened position, in which a first anchoring element formed in the anchoring part holds the contact element against the base body.

The releasable holding means preferably include pressure means for pressing the first heat transfer surface of the contact element against the second heat transfer surface of the base body when the anchoring part is moved by the releasable fixing element to the tightened position. The pressure means comprise inclined surfaces or bevels formed in the contact element, in the base body and in the anchoring part interacting with one another to produce a wedge effect causing the contact element to be pressed against the base body when the anchoring part is moved to the tightened position.

In one embodiment, each pressure and heat applicator includes several of the anchoring parts installed throughout an upper region of the base body, and each anchoring part is associated with one of the releasable fixing elements. In one embodiment, each releasable fixing element is a screw inserted through a hole of the anchoring part and coupled in a threaded hole of the base body, and said screw has an accessible head configured to be gripped and driven manually, such that the format change operation is performed easily and quickly without needing to use tools, although the screw could alternatively have a conventional head configured to be gripped by means of a tool.

In an alternative embodiment, the releasable fixing element is a nut coupled to a threaded stud fixed to the base body and inserted through a hole of the anchoring part, and said nut is configured to be gripped and driven manually or by means of a tool.

### Brief Description of the Drawings

The foregoing and other features and advantages will be better understood from the following detailed description of an embodiment with reference to the attached drawings, in which:
Figure 1 is a perspective view of a pair of pressure and heat applicators forming part of a welding unit according to an embodiment of the present invention, with releasable holding means in a tightened position;
Figure 2 is a perspective view of one of the pressure and heat applicators of Figure 1 with the releasable holding means in a loosened position, and a pair of contact elements separated from a base body;
Figure 3 is a cross-section view taken along plane III-III of Figure 1; and
Figure 4 is a view similar to Figure 3 but with the releasable holding means in a loosened position and the contact element separated from the base body.

### Detailed Description of an Embodiment

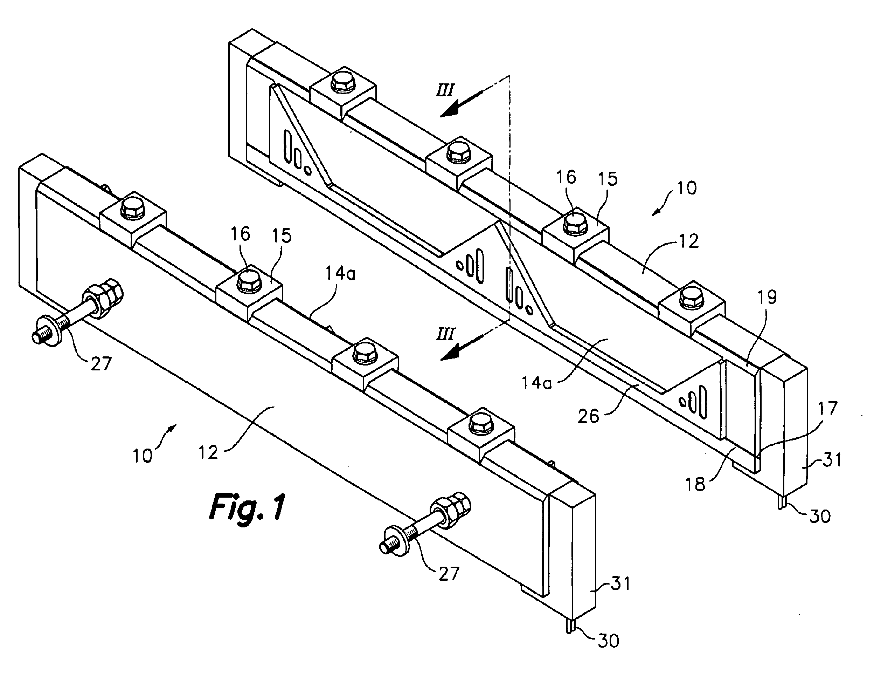

Referring first to Figure 1, the welding unit for an automatic container forming and filling machine according to an embodiment of the present invention comprises a pair of pressure and heat applicators 10 facing one another and located on opposite sides of a container precursor (not shown) made of flexible heat-sealable film. The two pressure and heat applicators 10 are preferably identical.

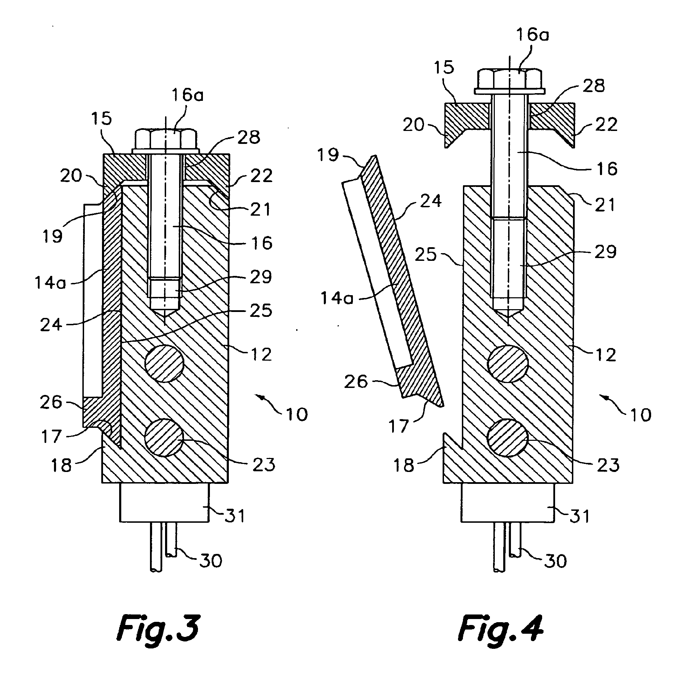

As better shown in Figures 3 and 4, each of the pressure and heat applicators 10 comprises a base body 12 heated by heating means including, for example, one or more electric resistances 23 associated with the base body 12 and connected to power supply means through conductor cables 30 and end supports 31. The base body 12 is connected by connecting rods 27 (Figure 1) to driving means (not shown) moving the pressure and heat applicators 10 between a released position, in which the pressure and heat applicators 10 are separated from the container precursor, and a welding position, in which the pressure and heat applicators 10 press and apply heat on the container precursor to form a weld.

Each pressure and heat applicator 10 further comprises a contact element 14a and anchoring parts 15 forming part of releasable holding means for fixing said contact element 14a to said base body 12. The contact element 14a is the element provided for contacting the container precursor and to that end has on an outer side projections 26 configured to form a weld with a predetermined format in contact with the container precursor.

The contact element 14a has on an inner side first flat and smooth heat transfer surface 24 which is in contact with a corresponding second flat and smooth heat transfer surface 25 formed in the base body 12 when in use. As will be seen below, said releasable holding means are configured to keep said first heat transfer surface 24 of the contact element 14a, 14b pressed against said second heat transfer surface 25 of the base body 12, such that the contact element 14a is heated simply by contact with the base body 12.

Several of said anchoring parts 15 are installed along the base body 12, and each anchoring part 15 is connected to the base body 12 by a corresponding releasable fixing element in the form of a screw 16 inserted through a hole 28 of the anchoring part 15 and coupled in a threaded hole 29 of the base body 12. In the embodiment shown, the screw 16 has an accessible head 16a configured to be gripped and driven by means of a tool. Nevertheless, in another alternative embodiment (not shown) the head 16a of the screw 16 is configured to be gripped and driven manually. In yet another alternative embodiment (not shown), the releasable fixing element comprises a nut coupled to a threaded stud fixed to the base body 12 and inserted through a hole of the anchoring part 15. In this case, the mentioned nut can also be configured to be gripped and driven manually.

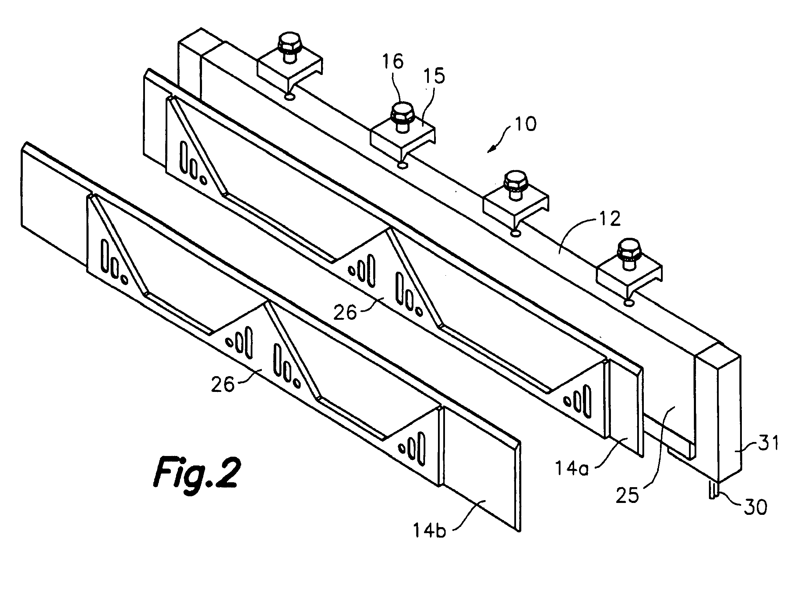

Therefore, the releasable fixing elements in the form of screws 16 can be operated to allow moving the anchoring parts 15 with respect to the base body 12 between a loosened position (Figures 2 and 4), in which the anchoring parts 15 are sufficiently separated from the base body 12 to allow the contact element 14a, 14b to be joined to or separated from the base body 12, and a tightened position (Figures 1 and 3), in which the anchoring part 15 holds the contact element 14a, 14b against the base body 12.

In the illustrated embodiment, the movement of the anchoring parts between the loosened and tightened positions is in a direction parallel to the first and second heat transfer surfaces 24, 25, and the releasable holding means include pressure means for pressing the first heat transfer surface 24 of the contact element 14a against the second heat transfer surface 25 of the base body 12 when the anchoring part 15 is moved by the screw 16 to the tightened position.

To that end, the contact element 14a, 14b has a first bevel 17 fitting into a first inclined surface formed in a shoulder 18 of the base body 12 and a second bevel 19 fitting into a second inclined surface formed in a first anchoring element 20 of the anchoring part 15. Therefore, the slipping of said first and second bevels 17, 19 over said first and second inclined surfaces produces a wedge effect causing the contact element 14a, 14b to be pressed against the base body 12 when the anchoring part 15 is moved to the tightened position. The first and second bevels 17, 19 extend entirely along first and second opposite longitudinal edges of the contact element 14a, 14b, and the shoulder 18 extends entirely along the base body 12.

Furthermore, the anchoring part 15 has a second anchoring element 22 on a side opposite said first anchoring element 20, and the base body 12 has an auxiliary bevel 21 on a side opposite the second heat transfer surface 25 fitting into an auxiliary inclined surface formed in said second anchoring element 22 of the anchoring part 15. Therefore, slipping of said auxiliary bevel 21 over said auxiliary inclined surface produces a wedge effect causing the contact element 14a to be additionally pressed against the base body 12 when the anchoring part 15 is moved to the tightened position.

The cooperation of the first and second anchoring elements 20, 22 of the anchoring part with the second bevel 19 and the auxiliary bevel 21, respectively, assures a balanced application of forces among the anchoring part 15, the base body 12 and the contact element 14a.

Figure 2 shows one of the pressure and heat applicators 10 with the screws 16 loosened, the anchoring parts 15 separated from the base body 12, and a first contact element 14a with projections 26 configured according to a first welding format recently removed from the base body 12. Figure 2 also shows a second contact element 14b with projections 26 configured according to a second welding format which is about to be placed in the base body 12 replacing the first contact element 14a.

With this construction, the welding unit of the present invention allows performing a format change easily and quickly by simply loosening the screws 16, removing the first contact element 14a from the base body 12, placing the second contact element 14b in the base body 12, and tightening the screws 16 again. The very simple format change operation is due to the fact that it is not necessary to interfere with the connections of the heating means or the driving means.

Modifications and variations with respect to the embodiment shown and described will occur to a person skilled in the art without departing from the scope of the present invention as defined in the attached claims.

## Claims

1. A welding unit for an automatic container forming and filling machine, comprising at least one pair of pressure and heat applicators (10) facing one another and located on opposite sides of a container precursor made of flexible heat-sealable film, heating means heating said pressure and heat applicators (10) and driving means moving said pressure and heat applicators (10) between a released position, in which the pressure and heat applicators (10) are separated from the container precursor, and a welding position, in which the pressure and heat applicators (10) press and apply heat on the container precursor to form a weld, wherein each of said pressure and heat applicators (10) comprises a base body (12) heated by said heating means and connected to said driving means, a contact element (14a, 14b) configured to form a weld with a predetermined format in contact with the container precursor, and releasable holding means for fixing said contact element (14a, 14b) to said base body (12), and wherein the contact element (14a, 14b) is heated by contact with the base body (12), **characterized in that** said releasable holding means comprise at least one anchoring part (15) connected to the base body (12) by a releasable fixing element which can be operated to allow moving said anchoring part (15) with respect to the base body (12) between a loosened position, in which the contact element (14a, 14b) can be joined to or separated from the base body (12), and a tightened position, in which a first anchoring element (20) formed in the anchoring part (15) holds the contact element (14a, 14b) against the base body (12), the movement of the anchoring part (15) between said loosened and tightened positions being in a direction parallel to first and second heat transfer surfaces (24, 25) of the contact element (14a, 14b) and the base body (12), respectively, and **in that** the contact element (14a, 14b) has a first bevel (17) fitting into a first inclined surface formed in a shoulder (18) of the base body (12) and a second bevel (19) fitting into a second inclined surface formed in said first anchoring element (20) of the anchoring part (15), wherein the interaction of said first and second bevels (17, 19) with said first and second inclined surfaces produces a wedge effect causing said heat transfer surface (24) of the contact element (14a, 14b) to be kept pressed against said heat transfer surface (25) of the base body (12) when the anchoring part (15) is moved to the tightened position.

2. The welding unit according to claim 1, **characterized in that** said heating means comprise at least one electric resistance (23) associated with the base body (12) and connected to power supply means.

3. The welding unit according to claim 1, **characterized in that** said first and second bevels (17, 19) extend entirely along first and second opposite longitudinal edges of the contact element (14a, 14b).

4. The welding unit according to claim 3, **characterized in that** said shoulder (18) extends entirely along the base body (12).

5. The welding unit according to claim 1, 3, or 4, **characterized in that** the anchoring part (15) has a second anchoring element (22) on a side opposite said first anchoring element (20), and the base body (12) has an auxiliary bevel (21) on a side opposite said second heat transfer surface (25) fitting into an auxiliary inclined surface formed in said second anchoring element (22) of the anchoring part (15), wherein the interaction of said auxiliary bevel (21) with said auxiliary inclined surface produces a wedge effect causing the contact element (14a, 14b) to be pressed against the base body (12) when the anchoring part (15) is moved to the tightened position.

6. The welding unit according to any one of claims 1 to 5, **characterized in that** several of said anchoring parts (15) are installed along the base body (12), and each anchoring part (15) is associated with one of said releasable fixing elements.

7. The welding unit according to claim 1, **characterized in that** said releasable fixing element comprises a screw (16) inserted through a hole of the anchoring part (15) and coupled in a threaded hole of the base body (12), said screw (16) having an accessible head (16a) configured to be gripped.

8. The welding unit according to claim 7, **characterized in that** said head (16a) is configured to be gripped and driven manually.

9. The welding unit according to claim 1, **characterized in that** said releasable fixing element comprises a nut coupled to a threaded stud fixed to the base body (12) and inserted through a hole of the anchoring part (15).

10. The welding unit according to claim 9, **characterized in that** said nut is configured to be gripped and driven manually.

## Patentansprüche

1. Schweißeinheit für eine automatische Behälterform- und -füllmaschine, umfassend zumindest ein Paar von Druck- und Wärmeanwendungselementen (10), die sich gegenüberstellen und sich auf gegenüberliegenden Seiten eines Behältervorprodukts, hergestellt aus flexibler Heißklebefolie, befinden, Heizmittel, welche die genannten Druck- und Wärmeanwendungselemente (10) erwärmen und Betätigungsmittel, welche die genannten Druck- und Wärmeanwendungselemente (10) zwischen einer freigegebenen Stellung, in welcher die Druck- und Wärmeanwendungselemente (10) von dem Behältervorprodukt getrennt sind, und einer Schweißstellung, in welcher die Druck- und Wärmeanwendungselemente (10) auf das Behältervorprodukt einen Druck ausüben und auf dasselbe Wärme anwenden, um eine Schweißnaht zu bilden, bewegen, wobei jedes der genannten Druck- und Wärmeanwendungselemente (10) einen Grundkörper (12), welcher von den genannten Heizmitteln erwärmt wird und mit den genannten Betätigungsmitteln verbunden ist, ein Kontaktelement (14a, 14b), welches dazu ausgebildet ist, eine Schweißnaht mit einem vorbestimmten Format in Kontakt mit dem Behältervorprodukt zu bilden, und freigebbare Haltemittel, um das genannte Kontaktelement (14a, 14b) an dem genannten Grundkörper (12) zu befestigen, umfasst, und wobei das Kontaktelement (14a, 14b) durch Kontakt mit dem Grundkörper (12) erwärmt wird, **dadurch gekennzeichnet, dass** die genannten freigebbaren Haltemittel zumindest ein Verankerungsstück (15) umfassen, welches durch ein freigebbares Befestigungselement mit dem Grundkörper (12) verbunden ist, das betätigt werden kann, um die Bewegung des genannten Verankerungsstücks (15) in Bezug auf den Grundkörper (12) zwischen einer gelockerten Stellung, in welcher das Kontaktelement (14a, 14b) mit dem Grundkörper (12) verbunden oder von diesem getrennt werden kann, und einer festen Stellung, in welcher ein erstes Verankerungselement (20), das in dem Verankerungsstück (15) gebildet ist, das Kontaktelement (14a, 14b) gegen den Grundkörper (12) hält, zu ermöglichen, wobei die Bewegung des Verankerungsstücks (15) zwischen der genannten gelockerten Stellung und der genannten festen Stellung in einer Richtung ist, die jeweils parallel zu einer ersten Wärmeübertragungsfläche (24) und einer zweiten Wärmeübertragungsfläche (25) des Kontaktelements (14a, 14b) und des Grundkörpers (12) verläuft, und dass das Kontaktelement (14a, 14b) eine erste Abschrägung (17) aufweist, welche in eine erste geneigte Fläche, die in einer Schulter (18) des Grundkörpers (12) gebildet ist, passt, und eine zweite Abschrägung (19) aufweist, welche in eine zweite geneigte Fläche, die in dem genannten ersten Verankerungselement (20) des Verankerungsstücks (15) gebildet ist, passt, wobei das Zusammenspiel der genannten ersten Abschrägung (17) und der genannten zweiten Abschrägung (19) mit der genannten ersten geneigten Fläche und der genannten zweiten geneigten Fläche eine Keilwirkung hervorruft, welche bewirkt, dass die genannte Wärmeübertragungsfläche (24) des Kontaktelements (14a, 14b) gegen die genannte Wärmeübertragungsfläche (25) des Grundkörpers (12) gedrückt gehalten wird, wenn das Verankerungsstück (15) zur festen Stellung bewegt wird.

2. Schweißeinheit nach Anspruch 1, **dadurch gekennzeichnet, dass** die genannten Heizmittel zumindest einen elektrischen Widerstand (23) umfassen, welcher mit dem Grundkörper (12) verbunden und an Stromversorgungsmitteln angeschlossen ist.

3. Schweißeinheit nach Anspruch 1, **dadurch gekennzeichnet, dass** sich die genannte erste Abschrägung (17) und sich die genannte zweite Abschrägung (19) vollständig entlang eines ersten gegenüberliegenden longitudinalen Randes und eines zweiten gegenüberliegenden longitudinalen Randes des Kontaktelements (14a, 14b) erstrecken.

4. Schweißeinheit nach Anspruch 3, **dadurch gekennzeichnet, dass** sich die genannte Schulter (18) vollständig entlang des Grundkörpers (12) erstreckt.

5. Schweißeinheit nach Anspruch 1, 3 oder 4, **dadurch gekennzeichnet, dass** das Verankerungsstück (15) ein zweites Verankerungselement (22) auf einer Seite, die dem ersten Verankerungselement (20) gegenüberliegt, aufweist, und der Grundkörper (12) eine Hilfsabschrägung (21) auf einer Seite, die der genannten zweiten Wärmeübertragungsfläche (25) gegenüberliegt, aufweist, wobei die Hilfsabschrägung (21) in eine geneigte Hilfsfläche passt, die in dem genannten zweiten Verankerungselement (22) des Verankerungsstücks (15) gebildet ist, wobei das Zusammenspiel der genannten Hilfsabschrägung (21) mit der genannten geneigten Hilfsfläche eine Keilwirkung hervorruft, welche bewirkt, dass das Kontaktelement (14a, 14b) gegen den Grundkörper (12) gedrückt wird, wenn das Verankerungsstück (15) zur festen Stellung bewegt wird.

6. Schweißeinheit nach einem der Ansprüche 1 bis 5, **dadurch gekennzeichnet, dass** mehrere der genannten Verankerungsstücke (15) entlang des Grundkörpers (12) installiert werden, und jedes Verankerungsstück (15) mit einem der genannten freigebbaren Befestigungselementen verbunden ist.

7. Schweißeinheit nach Anspruch 1, **dadurch gekennzeichnet, dass** das genannte freigebbare Befestigungselement eine Schraube (16) umfasst, welche durch ein Loch des Verankerungsstücks (15) eingesteckt und in einem Gewindeloch des Grundkörpers (12) gekoppelt wird, wobei die genannte Schraube (16) einen zugänglichen Kopf (16a) aufweist, welcher dazu ausgebildet ist, gegriffen zu werden.

8. Schweißeinheit nach Anspruch 7, **dadurch gekennzeichnet, dass** der genannte Kopf (16a) dazu ausgebildet ist, manuell gegriffen und betätigt zu werden.

9. Schweißeinheit nach Anspruch 1, **dadurch gekennzeichnet, dass** das genannte freigebbare Befestigungselement eine Mutter umfasst, welche mit einem Gewindebolzen gekoppelt ist, der an dem Grundkörper (12) befestigt ist und durch ein Loch des Verankerungsstücks (15) eingesteckt wird.

10. Schweißeinheit nach Anspruch 9, **dadurch gekennzeichnet, dass** die genannte Mutter dazu ausgebildet ist, manuell gegriffen und betätigt zu werden.

## Revendications

1. Ensemble de soudage pour une machine de formation et remplissage automatiques de récipients, comportant au moins une paire d'applicateurs de pression et de chaleur (10) se faisant face l'un l'autre et situés sur des côtés opposés d'une ébauche de récipient fait en une pellicule thermosoudable flexible, des moyens chauffants qui chauffent ces applicateurs de pression et de chaleur (10) et des moyens d'entraînement déplaçant ces applicateurs de pression et de chaleur (10) entre une position dégagée, dans laquelle les applicateurs de pression et de chaleur (10) sont écartés de l'ébauche de récipient et une position de soudage dans laquelle les applicateurs de pression et de chaleur (10) pressent l'ébauche de récipient et lui appliquent de la chaleur pour former un soudage, dans lequel chacun de ces applicateurs de pression et de chaleur (10) comporte un corps de base (12) chauffé par ces moyens chauffants et relié à ces moyens d'entraînement, un élément de contact (14a, 14b) configuré pour former un soudage ayant un format prédéterminé en contact avec l'ébauche de récipient et des moyens de fixation dégageables pour fixer cet élément de contact (14a, 14b) à ce corps de base (12) et dans lequel l'élément de contact (14a,14b) est chauffé par contact avec le corps de base (12), **caractérisé en ce que** ces moyens de fixation dégageables comportent au moins une partie d'ancrage (15) reliée au corps de base (12) par un élément de fixation dégageable pouvant être actionné pour permettre le déplacement de cette partie d'ancrage (15) par rapport au corps de base (12) entre une position desserrée, dans laquelle l'élément de contact (14a, 14b) peut être joint ou séparé du corps de base (12) et une position serrée, dans laquelle un premier élément d'ancrage (20) formé dans la partie d'ancrage (15) retient l'élément de contact (14a, 14b) contre le corps de base (12), le déplacement de la partie d'ancrage (15) entre ces positions desserrées et serrées étant en sens parallèle à des première et deuxième surfaces caloporteuses (24, 25) de l'élément de contact (14a, 14b) du corps de base (12), respectivement, et **en ce que** l'élément de contact (14a, 14b) possède un premier biseau (17) s'adaptant à une première surface inclinée formé dans un épaulement (18) du corps de base (12) et un deuxième biseau (19) s'adaptant à une deuxième surface inclinée formée dans ce premier élément d'ancrage (20) de la partie d'ancrage (15), dans lequel l'interaction de ces premier et deuxième biseaux (17, 19) avec ces première et deuxième surfaces inclinées produit un effet de cale qui fait que cette surface caloporteuse (24) de l'élément de contact (14a, 14b) reste pressée contre cette surface caloporteuse (25) du corps de base (12) lorsque la partie d'ancrage (15) est déplacée à la position de serrage.

2. L'unité de soudage conformément à la revendication 1, **caractérisée en ce que** ces moyens de chauffage comportent au moins une résistance électrique (23) reliée au corps de base (12) et connectée à des moyens d'alimentation de courant.

3. L'ensemble de soudage conformément à la revendication 1, **caractérisée en ce que** ces premier et deuxième biseaux (17,19) s'étendent le long des premier et deuxième bords longitudinaux opposés de l'élément de contact (14a, 14b).

4. L'ensemble de soudage conformément à la revendication 3, **caractérisé en ce que** cet épaulement (18) s'étend entièrement le long du corps de base (12).

5. L'ensemble de soudage conformément à la revendication 1, 3 ou 4, **caractérisé en ce que** la partie d'ancrage (15) possède un deuxième élément d'ancrage (22) sur un côté opposé à ce premier élément d'ancrage (20), et le corps de base (12) possède un biseau auxiliaire (21) sur le côté opposé à cette deuxième surface caloporteuse (25) s'adaptant à une surface auxiliaire inclinée formée dans ce deuxième élément d'ancrage (22) de la partie d'ancrage (15), dans lequel l'interaction de ce biseau auxiliaire (21) avec cette surface inclinée auxiliaire produit un effet de cale qui fait que l'élément de contact (14a, 14b) est pressé contre le corps de base (12) lorsque la partie d'ancrage (15) est déplacée à la position de serrage.

6. L'ensemble de soudage conformément à une des revendications 1 à 5, **caractérisé en ce que** ces parties d'ancrage (15) sont installées le long du corps de base (12) et chaque partie d'ancrage (15) est associée à un de ces éléments de fixation dégageable.

7. L'ensemble de soudage conformément à la revendication 1, **caractérisé en ce que** cet élément de fixation dégageable comporte une vis (16) insérée à travers un trou de la partie d'ancrage (15) et couplée dans un trou taraudé du corps de base (12), cette vis (16) ayant une tête accessible (16a) configurée pour être saisie.

8. L'ensemble de soudage conformément à la revendication 7, **caractérisé en ce que** cette tête (16a) es configurée pour être saisie et entraînée manuellement.

9. L'ensemble de soudage conformément à la revendication 1 **caractérisé en ce que** cet élément de fixation dégageable comporte un écrou couplé à un goujon fixé sur le corps de base (12) et inséré à travers un trou de la partie d'ancrage (15).

10. L'ensemble de soudage conformément à la revendication 9, **caractérisé en ce que** cet écrou est configuré pour être saisi et entraîné manuellement.
